# EUROPÄISCHE PATENTSCHRIFT

(11) **EP 0 667 316 B1**
(45) Veröffentlichungstag und Bekanntmachung des Hinweises auf die Patenterteilung: **04.11.1998**
(21) Anmeldenummer: 94890206.9
(22) Anmeldetag: 09.12.1994
(51) Int. Cl.: B66F 11/04, B61D 15/00

(54) **Arbeitswagen**
Maintenance vehicle
Véhicule d'entretien

(30) Priorität: 12.01.1994 AT 34/94
(43) Veröffentlichungstag der Anmeldung: 16.08.1995
(73) Patentinhaber: Franz Plasser Bahnbaumaschinen- Industriegesellschaft m.b.H., 1010 Wien (AT)
(72) Erfinder: Theurer, Josef, A-1010 Wien (AT); Oellerer, Friedrich, A-4040 Linz (AT); Gruber, Leopold Rudolf, A-3270 Scheibbs (AT)

(56) Entgegenhaltungen:
- EP-A- 0 433 935
- FR-A- 2 531 389

## Beschreibung

Die Erfindung betrifft einen Arbeitswagen mit einem auf Schienenfahrwerken abgestützten Wagenrahmen, einem auf diesen befindlichen Wagenaufbau mit einer Fahrkabine und mit einer höhenverstellbaren Arbeitsbühne.

Es ist gemäß der Fachzeitschrift "Railway Gazette International, September 1987, Seite 580", ein Motorturmwagen bekannt, der eine vergrößerbare Arbeitsbühne aufweist. Diese ist teleskopförmig verlängerbar und kann dadurch auf ca. doppelte Arbeitsfläche vergrößert werden. Diese durch ein Scherengitter höhenverstellbare Arbeitsbühne ist jedoch nur in Gleisquerrichtung erweiterbar. In Gleislängsrichtung können noch zusätzlich zwei Arbeitsstände erhöht von der Arbeitsbühne manuell eingesetzt werden. Diese bieten jedoch nur höchstens einem Monteur Platz. Eine derartige Lösung ermöglicht eine lediglich geringfügige Erweiterung des Aktionsradius in Maschinenquerrichtung.

Durch die EP 0 003 727 B1 ist ein anderer Motorturmwagen bekannt, welcher eine Arbeitsplattform und einen endseitig mit einer Arbeitsbühne verbundenen Ausleger, aufweist. Die Arbeitsplattform ist am Aufbau des Motorturmwagens angebracht und setzt sich aus zwei in Maschinenquerrichtung einander gegenüberliegenden Teilen zusammen, die für die Arbeitsposition geringfügig höhenverstellbar sind.

Die Aufgabe der vorliegenden Erfindung liegt nun in der Schaffung eines schienenverfahrbaren Arbeitswagens mit einer Arbeitsbühne, die zur Durchführung bestimmter Arbeiten wahlweise mit einer konstruktiv einfachen Lösung einfach und rasch vergrößerbar ist.

Diese Aufgabe wird mit einem gattungsgemäßen Arbeitswagen dadurch gelöst, daß eine Zusatz-Arbeitsbühne über Befestigungseinrichtungen lösbar mit dem Wagenaufbau verbindbar ist und daß an der Arbeitsbühne sowie der Zusatz-Arbeitsbühne Kupplungseinrichtungen für eine wahlweise Verbindung der beiden Arbeitsbühnen miteinander vorgesehen sind.

Eine derartige Lösung ermöglicht eine sehr einfache und rasche Erweiterung der Arbeitsbühne im Bedarfsfall, wobei sich durch das Andocken der Zusatz-Arbeitsbühne eine technisch aufwendige und das Eigengewicht erhöhende Konstruktion der Arbeitsbühne erübrigt. Außerdem ist in vorteilhafter Weise die erweiterte Arbeitsbühne ebenso uneingeschränkt beispielsweise mit Hilfe eines Auslegers verstellbar, so daß für beide Einsatzmöglichkeiten ein größtmöglicher Einsatzbereich zur Verfügung steht. Mit der Anordnung der Zusatz-Arbeitsbühne auf dem Wagenaufbau wird eine störende Einflußnahme auf die Bewegungsfreiheit der Arbeitsbühne bzw. auch auf andere am Arbeitswagen befindliche Einrichtungen zuverlässig ausgeschlossen. Die vorzugsweise hydraulisch fernsteuerbaren Kupplungseinrichtungen ermöglichen einerseits eine sehr kurze Umrüstzeit sowie andererseits eine sichere Verbindung.

Eine Weiterbildung der Erfindung nach den Ansprüchen 2 und 3 führt bei einem hohen Maß an Betriebssicherheit zu einer sehr rasch durchführbaren Erweiterung bzw. Verkleinerung der Arbeitsbühne.

Eine andere Weiterbildung nach Anspruch 4 ermöglicht sowohl im normalen als auch erweiterten Zustand der Arbeitsbühne deren weitgehend uneingeschränkte Positionierung in bezug auf die zu bearbeitende Fahrleitung oder dergleichen. Mit der Ausbildung gemäß Anspruch 5 wird eine automatische Anpassung der Höhenverstellkräfte erzielt. Zusätzlich ermöglichen die Merkmale nach Anspruch 6 auch eine automatische Drehbegrenzung des Kranauslegers in Abhängigkeit vom Arbeitszustand der Arbeitsbühne.

Schließlich ermöglicht die Ausbildung nach Anspruch 7 eine sehr einfache und wirkungsvolle Erweiterung des Sicherungsgeländers im angedockten Zustand der Zusatz-Arbeitsbühne.

Im folgenden wird die Erfindung an Hand in der Zeichnung dargestellter Ausführungsbeispiele näher beschrieben.

Es zeigen:
Fig. 1 eine Seitenansicht eines Arbeitswagens mit einer auf einem Kranausleger befestigten Arbeitsbühne und einer weiteren, auf einem Aufbau abgestützten Zusatz-Arbeitsbühne,
Fig. 2 eine vergrößerte, teilweise Seitenansicht des Arbeitswagens mit ausgefahrener und durch die Zusatz-Arbeitsbühne vergrößerter Arbeitsbühne,
Fig. 3 eine vereinfachte, vergrößerte Teil-Draufsicht auf beide Arbeitsbühnen, und
Fig. 4 eine schematisch vereinfachte Draufsicht auf die Arbeitsbühnen mit unterschiedlichen Winkelstellungen.

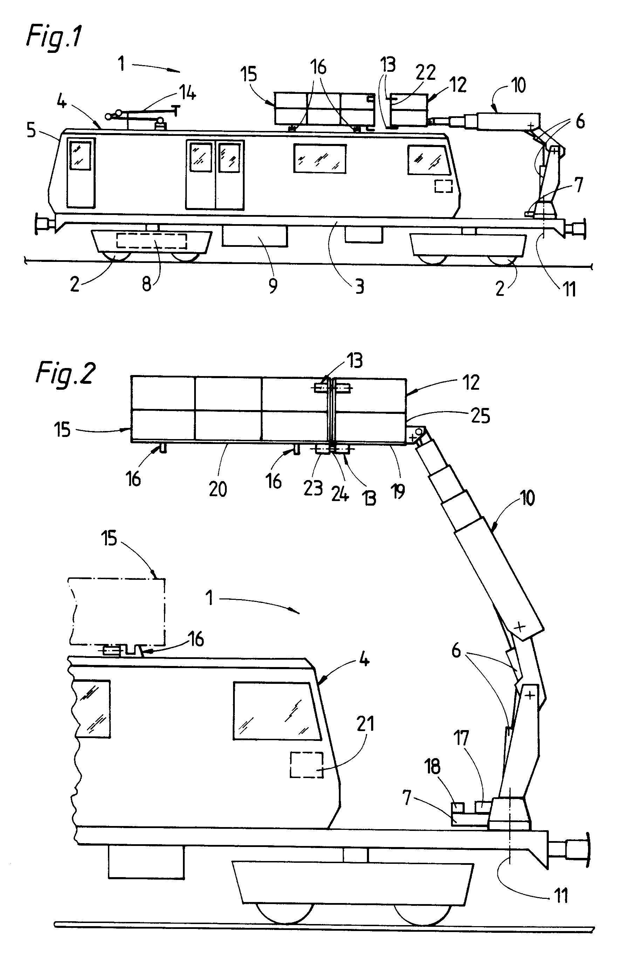

Ein in Fig. 1 dargestellter Arbeitswagen 1 weist einen auf Schienenfahrwerken 2 abgestützten Wagenrahmen 3 mit einem Wagenaufbau 4 auf, welcher im wesentlichen aus einer Fahrkabine 5 und Sozialräumen besteht. Zur Energieversorgung verschiedener Antriebe 6,7 sowie eines Fahrantriebes 8 ist ein Motor 9 vorgesehen. An einem Ende des Arbeitswagens 1 ist ein teleskopisch verlängerbarer und durch die Antriebe 6 höhenverstellbarer Kranausleger 10 am Wagenrahmen 3 angeordnet. Durch den Antrieb 7 ist der Kranausleger 10 um eine vertikale Achse 11 verstellbar ausgebildet. Am Kranausleger 10 ist eine Arbeitsbühne 12 befestigt, welche an einer dem Kranausleger 10 gegenüberliegenden Stirnwand 22 mit Kupplungseinrichtungen 13 versehen ist. Auf dem Wagenaufbau 4 befindet sich ein Fahrleitungsmeßbügel 14 sowie eine Zusatz-Arbeitsbühne 15, welche durch Befestigungseinrichtungen 16 lösbar mit dem Wagenaufbau 4 verbunden ist.

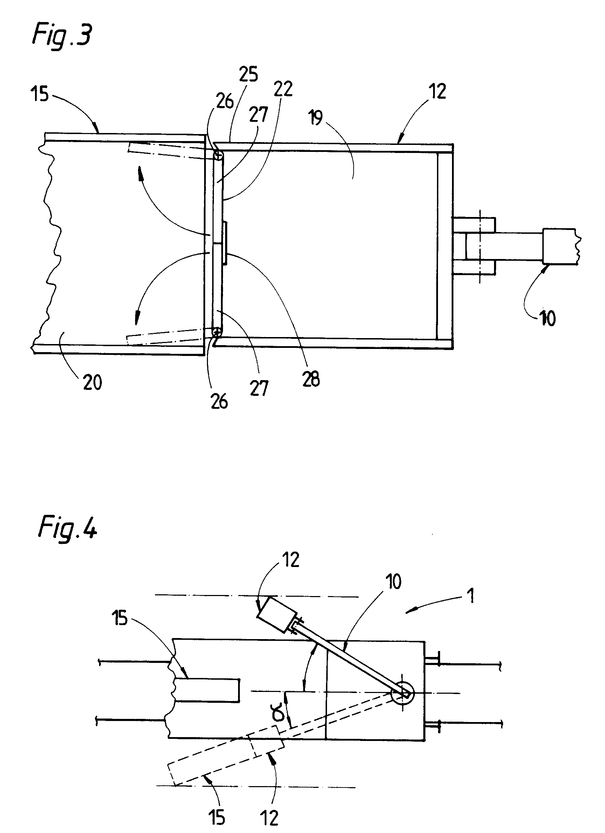

Wie in Fig. 2 zu erkennen ist, kann die ebenfalls Kupplungseinrichtungen 13 aufweisende Zusatz-Arbeitsbühne 15 bedarfsweise mit der Arbeitsbühne 12 durch ferngesteuerte Beaufschlagung der Kupplungseinrichtungen 13 verbunden werden, um eine größere Arbeitsfläche zu erzielen. Dazu müssen die Befestigungseinrichtungen 16 vorher gelöst werden. Aus Sicherheitsgründen können diese aber erst dann entriegelt werden, wenn die beiden Bühnen 12, 15 durch die Kupplungseinrichtungen 13 miteinander verbunden sind. Die unteren Kupplungseinrichtungen 13 sowie die Befestigungseinrichtungen 16 sind unterhalb von Bodenplattformen 19,20 der Arbeits- bzw. Zusatz-Arbeitsbühne 12,15 angebracht. Um ein effizientes Arbeiten zu ermöglichen, ist eine Hydraulikanlage 21 des Kranauslegers 10 als Zweidrucksystem ausgebildet. Sobald die einander gegenüberliegenden Kupplungseinrichtungen 13 der beiden Arbeitsbühnen 12,15 miteinander verbunden sind, werden die Antriebe 6 mit einem höheren Arbeits- oder Betriebsdruck beaufschlagt. Diese automatische Umschaltung erfolgt durch Abstandsdetektoren 23, die die Verlagerung eines Verriegelungsbolzens 24 erfassen. Durch die erhöhte Last bei an die Arbeitsbühne 12 angekuppelter Zusatz-Arbeitsbühne 15 ist es einerseits aus Stabilitätsgründen und andererseits auch zur Vermeidung einer Lichtraumprofilüberschreitung nicht möglich, den Kranausleger 10 so weit zu verschwenken wie bei alleiniger Verwendung der Arbeitsbühne 12. Deshalb weist der Antrieb 7 eine Einrichtung 17 auf, welche einen großen und einen kleinen Drehwinkel um die Achse 11 begrenzen kann. Eine Steuereinrichtung 18 beeinflußt die Einrichtung 17 dahingehend, daß bei einer Umschaltung auf den höheren Betriebsdruck (also Einsatz von Arbeits- und Zusatzarbeitsbühne 12, 15) ein Verschwenken des Kranauslegers 10 nur um den kleinen Drehwinkel möglich ist. Dieser ist in Fig. 4 als α bezeichnet und bewirkt, daß trotz vergrößerter Arbeitsbühne 12 eine Überschreitung des Lichtraumprofiles (strichpunktierte Linien) zuverlässig vermieden wird.

Wie in Fig. 3 ersichtlich ist ein die Bodenplattform 19 der Arbeitsbühne 12 begrenzendes Sicherungsgeländer 25 im Bereich der im angedockten Zustand an die Zusatzarbeitsbühne 15 angrenzenden Stirnwand 22 aus zwei je um eine vertikale Achse 26 verschwenkbar gelagerten Türen 27 gebildet. Diese sind für den alleinigen Arbeitseinsatz der Arbeitsbühne 12 durch eine Verriegelungseinrichtung 28 miteinander verbindbar.

## Patentansprüche

1. Arbeitswagen (1) mit einem auf Schienenfahrwerken (2) abgestützten Wagenrahmen (3), einem auf diesen befindlichen Wagenaufbau (4) mit einer Fahrkabine (5) und mit einer höhenverstellbaren Arbeitsbühne (12), dadurch gekennzeichnet, daß eine Zusatz-Arbeitsbühne (15) über Befestigungseinrichtungen (16) lösbar mit dem Wagenaufbau (4) verbindbar ist und daß an der Arbeitsbühne (12) sowie der Zusatz-Arbeitsbühne (15) Kupplungseinrichtungen (13) für eine wahlweise Verbindung der beiden Arbeitsbühnen (12,15) miteinander vorgesehen sind.

2. Arbeitswagen nach Anspruch 1, dadurch gekennzeichnet, daß die Befestigungseinrichtungen (16) bzw. die Kupplungseinrichtungen (13) unterhalb einer Bodenplattform (19,20) der Arbeits- bzw. Zusatzarbeitsbühne (12,15) angeordnet sind.

3. Arbeitswagen nach Anspruch 1 oder 2, dadurch gekennzeichnet, daß die Kupplungs- und Befestigungseinrichtungen (13,16) für eine automatische wechselseitige Beaufschlagung bzw. Aktivierung ausgebildet sind, wobei jeweils eine Einrichtung (13 bzw. 16) für eine Kupplung aktiv und die andere Einrichtung (16 bzw. 13) für eine Freigabe passiv geschaltet ist.

4. Arbeitswagen nach Anspruch 1, 2 oder 3, dadurch gekennzeichnet, daß die Arbeitsbühne (12) an einer Stirnwand mit einem teleskopisch verlängerbaren und höhenverstellbaren Kranausleger (10) verbunden ist und daß die Kupplungseinrichtung (13) an der dem Kranausleger (10) gegenüberliegenden Stirnwand (22) der Arbeitsbühne (12) positioniert ist.

5. Arbeitswagen nach einem der Ansprüche 1 bis 4, dadurch gekennzeichnet, daß Antrieben (6) zur Höhenverstellung des Kranauslegers (10) ein hydraulisches Zweidrucksystem zur Beaufschlagung mit zwei unterschiedlich hohen Arbeitsdrücken zugeordnet ist, wobei die Umschaltung auf höheren Arbeitsdruck automatisch mit einer Aktivierung der Befestigungseinrichtung (16) erfolgt.

6. Arbeitswagen nach Anspruch 5, dadurch gekennzeichnet, daß ein für die Drehung des Kranauslegers (10) um eine vertikale Drehachse (11) vorgesehener Antrieb (7) mit einer Einrichtung (17) zur Begrenzung eines großen bzw. eines kleinen Drehwinkels sowie mit einer Steuereinrichtung (18) ausgestattet ist, die bei höherem Arbeitsdruck automatisch eine Umstellung der Einrichtung (17) auf einen kleineren Drehwinkel durchführt.

7. Arbeitswagen nach einem der Ansprüche 1 bis 6, dadurch gekennzeichnet, daß ein die Bodenplattform (19) der Arbeitsbühne (12) begrenzendes Sicherungsgeländer (25) im Bereich einer im angedockten Zustand an die Zusatz-Arbeitsbühne (15) angrenzenden Strinwand (22) aus zwei je um eine vertikale Achse (26) verschwenkbar gelagerten Türen (27) gebildet ist, die durch eine Verriegelungseinrichtung (28) miteinander verbindbar sind.

## Claims

1. A working wagon (1) comprising a wagon frame (3) supported on on-track undercarriages (2), a wagon superstructure (4) located thereon with a driver's cab (5), and a vertically adjustable working stage (12), characterized in that an additional working stage (15) may be separably connected to the wagon superstructure (4) by means of attachment devices (16), and in that coupling devices (13) are provided on the working stage (12) and on the additional working stage (15) for optionally joining the two working stages (12,15) together.

2. A working wagon according to claim 1, characterized in that the attachement devices (16) or the coupling devices (13) are arranged beneath a base platform (19,20) of the working and the additional working stage (12,15) respectively.

3. A working wagon according to claim 1 or 2, characterized in that the coupling and attachment devices (13,16) are designed for automatic reciprocal operation or activation, one device (13 or 16) being switched active for coupling and the respective other device (16 or 13) being switched passive for release.

4. A working wagon according to claim 1, 2 or 3, characterized in that the working stage (12) is connected on one end wall to a telescopically extendable and vertically adjustable crane jib (10), and in that the coupling device (13) is positioned on the end wall (22) of the working stage (12) situated opposite the crane jib (10).

5. A working wagon according to one of claims 1 to 4, characterized in that a hydraulic two-pressure system is associated with drives (6) for vertically adjusting the crane jib (10), for operating with two working pressures of different magnitudes, the change-over to the higher working pressure occurring automatically with activation of the attachment device (16).

6. A working wagon according to claim 5, characterized in that a drive (7) provided for rotating the crane jib (10) about a vertical axis of rotation (11) is equipped with a device (17) for defining a large or small angle of rotation and with a control device (18) which, when the higher working pressure applies, automatically effects a change-over of the device (17) to a smaller angle of rotation.

7. A working wagon according to one of claims 1 to 6, characterized in that a safety railing (25) bounding the base platform (19) of the working stage (12) is composed of two doors (27) in the region of an end wall (22) adjoining the additional working stage (15) in the docked state, each of the said doors being mounted for pivoting around a vertical axis (26) and being adapted for joining together by a locking device (28).

## Revendications

1. Véhicule d'entretien (1) avec un châssis de wagon (3) prenant appui sur des trains de roulement sur rails (2), une structure de wagon (4) se trouvant sur celui-ci avec une cabine de conduite (5) et une plate-forme de travail (12) réglable en hauteur, caractérisé en ce qu'une plate-forme de travail additionnelle (15) peut être reliée par des installations de fixation (16) amoviblement à la structure de wagon (4) et que sont prévues à la plate-forme de travail (12) ainsi qu'à la plate-forme de travail additionnelle (15) des installations d'accouplement (13) pour une connexion sélective des deux plate-formes de travail (12, 15) l'une avec l'autre.

2. Véhicule d'entretien selon la revendication 1, caractérisé en ce que les installations de fixation (16) respectivement les installations d'accouplement (13) sont disposées en dessous d'une plate-forme de plancher (19, 20) de la plate-forme de travail respectivement de la plate-forme de travail additionnelle (12, 15).

3. Véhicule d'entretien selon la revendication 1 ou 2, caractérisé en ce que les installations d'accouplement et de fixation (13, 16) sont réalisées pour une sollicitation respectivement activation automatique mutuelle, respectivement une installation (13 respectivement 16) pour un accouplement étant commutée d'une manière active et l'autre installation (16 respectivement 13) pour une libération d'une manière passive.

4. Véhicule d'entretien selon la revendication 1, 2 ou 3, caractérisé en ce que la plate-forme de travail (12) est reliée à une paroi frontale à un bras de grue (10) pouvant être allongé télescopiquement et réglable en hauteur et que l'installation d'accouplement (13) est positionnée à la paroi frontale (22) de la plate-forme de travail (12) opposée au bras de grue (10).

5. Véhicule d'entretien selon l'une des revendications 1 à 4, caractérisé en ce qu'il est associé à des commandes (6) pour le réglage en hauteur du bras de grue (10) un système hydraulique à deux pressions pour la sollicitation avec deux pressions de travail de hauteur différente, la commutation à une pression de travail plus élevée ayant lieu automatiquement avec une activation de l'installation de fixation (16).

6. Véhicule d'entretien selon la revendication 5, caractérisé en ce qu'une commande (7) prévue pour la rotation du bras de grue (10) autour d'un axe de rotation vertical (11) est équipée d'une installation (17) pour limiter un grand angle de rotation respectivement un petit angle de rotation ainsi que d'une installation de commande (18) qui, lors d'une pression de travail plus élevée exécute automatiquement un changement de l'installation (17) à un angle de rotation plus petit.

7. Véhicule d'entretien selon l'une des revendications 1 à 6, caractérisé en ce qu'un garde-corps (25) délimitant la plate-forme de plancher (19) de la plate-forme de travail (12) est réalisé au voisinage d'une paroi frontale (22) avoisinant à l'état accouplé la plate-forme de travail additionnelle (15) par deux portes (27) logées respectivement de manière pivotante autour d'un axe vertical (26) qui peuvent être reliées l'une à l'autre par un dispositif de verrouillage (28).
